(19) Europäisches Patentamt
European Patent Office
Office européen des brevets

(11) Publication number: **0 074 670**
**B1**

(12) # EUROPEAN PATENT SPECIFICATION

(45) Date of publication of patent specification: **07.01.87**

(51) Int. Cl.[4]: **C 09 B 67/54,** C 09 B 29/085, C 09 B 1/28, C 09 B 69/00

(21) Application number: **82108498.5**

(22) Date of filing: **15.09.82**

(54) **Process for removing impurities from polyalkyleneoxy coloring agents.**

(30) Priority: **16.09.81 US 302925**

(43) Date of publication of application:
**23.03.83 Bulletin 83/12**

(45) Publication of the grant of the patent:
**07.01.87 Bulletin 87/02**

(84) Designated Contracting States:
**AT BE CH DE FR GB IT LI LU NL SE**

(56) References cited:
**DE-C- 828 839**
**GB-A- 878 460**
**US-A-2 131 712**
**US-A-3 157 633**
**US-A-4 091 034**

(73) Proprietor: **MILLIKEN RESEARCH CORPORATION**
**Iron Ore Road P.O. Box 1927**
**Spartanburg South Carolina 29304 (US)**

(72) Inventor: **Cross, John Parson**
**3419 Ledgestone Drive**
**Houston Texas 77059 (US)**
Inventor: **Brendle, Ralph Noble**
**Route 8 Grouse Lane**
**Spartanburg South Carolina 29303 (US)**

(74) Representative: **Staub, Gabriela, Dr.-Ing. et al**
**c/o Modiano e Associati Via Meravigli 16**
**I-20123 Milano (IT)**

**EP 0 074 670 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for separating polymeric alkyleneoxy coloring agents from impurities normally present in a crude reaction product by means of the cloud point phenomenon.

Polymeric, alkyleneoxy, chromophoric group containing compounds have been known for many years as disclosed in U.S. Patent Number 3,157,633 to Kuhn which provides polymeric surfactant compounds having at least 30 repeating ethyleneoxy units in the molecule, a molecular weight of at least 1000 and a dyestuff radicle attached to the polymeric chain. Typically such compounds may be water soluble and they have accordingly been used extensively, as disclosed by Kuhn, as fugitive tints in the textile industry because they may be easily removed from textile fibers by scouring with aqueous solutions.

Recently, it has been discovered that certain polyalkyleneoxy compounds may advantageously be employed as coloring agents in resin systems where the coloring agent may react with the resin and actually be bound to the resin by covalent bonding. Such coloring agents and methods for coloring resins are disclosed in U.S. Patent Number 4,284,729 filed March 31, 1980 (incorporated by reference) to John P. Cross and George H. Britton, Jr. Unfortunately, however, the methods known in the art for preparing polyalkyleneoxy compounds, as disclosed for instance in the Kuhn patent, have typically resulted in a reaction product being provided in the form of an aqueous solution containing substantial amounts of water soluble impurities, e.g., inorganic salts, which may be detrimental in end use applications of the type disclosed in the Cross et al. application, that is where they are employed as coloring agents. It, therefore, would be highly desirable to remove those impurities from the compositions before they are actually employed for their intended end use applications. Thus, the present invention is directed to a method whereby such impurities may be removed from polymeric, polyalkyleneoxy coloring agents. Described in DE—A—828 839 is the problem of removing impurities from products obtained by the reaction of polyalkylenes and hydroxyl- or carboxyl-containing compounds by heating the crude reaction mixture and separating the two phases.

According to the present invention a process is provided for removing impurities from a polyalkyleneoxy coloring agent, which comprises heating a crude reaction product containing said polyalkyleneoxy coloring agent and impurities to a temperature at which the crude reaction product separates into two liquid phases, one phase containing said coloring agent in relatively pure form and the other phase containing said impurities; and separating the phase containing said coloring agent from the phase containing said impurities.

The polyalkyleneoxy coloring agents of the present invention may be provided in the liquid or solid phase at ambient conditions of temperature and pressure. Preferred compounds according to the invention may be characterized by the general formula:

$$R\text{-(polymeric constituent-x)}_n$$

where R is an organic dyestuff radical; the polymeric constituent is selected from polyalkylene oxides and copolymers of polyalkylene oxides in which the alkylene moiety of the polymeric constituent contains 2 or more carbon atoms, and such polymeric constituent has a molecular weight of from 100 to 10,000; n is an integer of from 1 to 6; x is selected from —OH, —$NH_2$ and —SH; and wherein R is attached by an amino nitrogen to the polymeric constituent. Compounds contemplated within this class are those wherein R is a nitroso, nitro, azo, including monazo, diazo and triazo, diphenylmethane, triarylmethane, xanthene, acridene, methine, thiazole, indamine, azine, oxazine, or anthraquinone dyestuff radical.

The polyalkyleneoxy coloring agents employed in the process of the present invention are fully described in the heretofore cited U.S. Patent Number 3,157,633.

Typically, the procedure is described in U.S. Patent Number 3,157,633 for preparing polymeric, alkyleneoxy, chromophoric group containing compounds may result in the compound being produced in a crude reaction mixture containing substantial amounts of impurities in the form of by-products produced during the synthesis of the desired compound. These materials are generally water soluble, e.g., inorganic salts, as is the chromophoric group containing compound making separation based on differing solubility quite difficult if not impossible. Their presence, furthermore, is undesirable in a coloring agent product designed, for instance, for incorporation into urethanes by the formation of covalent bonds because they may interfere with the polymerization reaction. Until the present invention, furthermore, no fully satisfactory method has been available for the removal of such impurities from the reaction mixture. It has now been discovered, however, that by making use of a rather unusual property of these compounds a simple, and effective separation of the compounds from impurities present in the crude reaction mixture may be accomplished. The separation is accomplished by simply heating the crude aqueous reaction mixture at least to the cloud point. On passing the cloud point, the crude reaction mixture separates into two phases — one phase containing the colorant and a second aqueous phase containing substantial amounts of impurities such as water soluble salts. The two phases may then be separated by any of the means known in the art. Additional water may be added to the colorant containing phase and the separation may be repeated one or more times to further purify the colorant.

The following examples illustrate the invention but are not to be construed as a limitation thereof. The parts and percentages are all by weight unless otherwise specified.

Preparation 1

Ethylene oxide was bubbled into warm aniline under nitrogen until two molar equivalents of ethylene oxide were consumed. There was thus produced N,N-dihydroxyethylaniline, which solidified on cooling to room temperature.

Similarly, meta-toluidine was treated with ethylene oxide producing N'N-dihydroxyethyl-m-toluidine.

Preparation II

Five hundred forty-three grams (3 moles) of N,N-dihydroxyethylaniline and 2.3 grams potassium hyroxide were placed in a 2 liter stainless steel pressure reactor equipped with an agitator gas inlet tube and vent. After purging with nitrogen, the reactor and contents were heated at 100°C under vacuum and held on temperature for 0.5 hours. The vacuum was broken with nitrogen and the reactor was heated to 150°C. Ethylene oxide was added through the inlet tube until eight equivalents were consumed. After post-reacting for 30 minutes, the mixture was subjected to vacuum for 30 minutes, then cooled to room temperature. the thus produced intermediate:

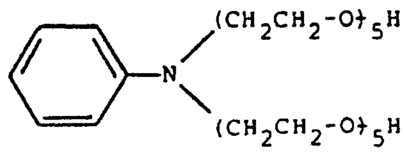

was an amber, freeflowing liquid.

Preparation III

The method of Preparation II was followed, using N,N-dihydroxyethyl-m-toluidine and enough ethylene oxide to add weight moles. The product was the formula:

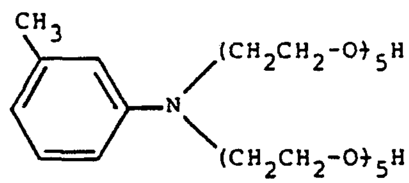

and was a liquid at room temperature.

Example I

To a 2 liter glass reactor was charged aniline (47.9 grams, 0.52 moles), which was cooled to 0°C. Hydrochloric acid (161 grams) was added dropwise with stirring, and the resulting mixture cooled to 0°C. Sodium nitrate (430.3 grams, 0.58 moles) was dissolved in water (80 milliliters) and added dropwise to the aniline solution while maintaining the temperture below 5°C. When addition was complete, the mixture was stirred for 30 minutes and excess nitrite was conformed by starch-iodide paper. Sulfamic acid was added in portions until excess nitrite was consumed.

In another reactor, the intermediate of Preparation III (282 grams, 0.52 moles) was charged. A solution of sodium acetate (29.6 grams, 0.36 moles) in water (51 milliliters) was prepared. The previously prepared aniline diazonium solution was added in portions using the sodium acetate solution to maintain the pH of the coupling bath at 4—5. Temperature was maintained below 10°C. The mixture was post-stirred for one hour after addition of diazonium salt was complete.

The mixture was poured into a beaker and heated to 95°C on a stream bath. The colorant formed a layer on top of the solution and was decanted. The thus isolated material, a dark liquid, was treated with an equal volume of water and heated to 95°C whereupon the formation of two phases again occurred. This time the colorant formed a layer on the bottom. The aqueous layer was decanted and discarded. The colorant was again treated with water and two phases formed by heating to 95°C. The aqueous layer was decanted and discarded.

After removing volatile components at 85°C and 2 mmHg vacuum to 99.4 percent nonvolatile, a yellow colorant was obtained:

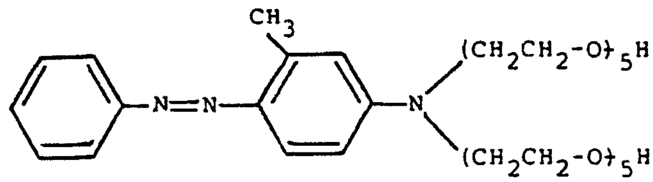

Example II

In a manner similar to Example I, aniline and the ethoxylated intermediate of Preparation II were coupled giving a yellow colorant of the structure:

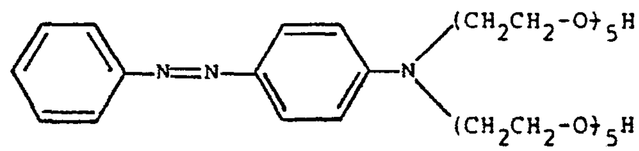

Example III

In a manner similar to Example I, 2-amino-5-nitroanisole and the intermediate of Preparation III were coupled giving a red colorant:

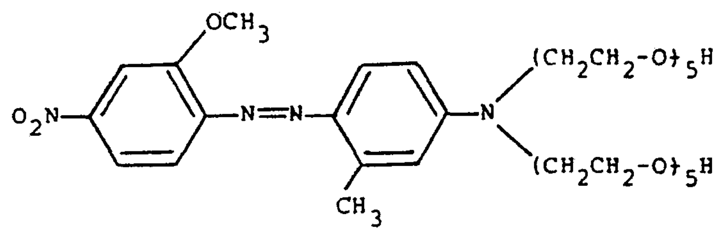

Example IV

Using the methods described in U.S. Patent 4,137,243, a colorant was prepared from quinizarin and diamine of molecular weight 230 derived from a polypropylene oxide. The resulting viscous blue colorant has the structure:

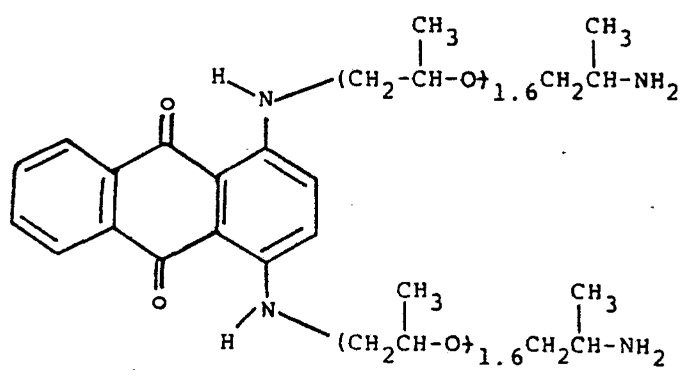

Example V

Using standard procedures, 2-amino-6-methoxybenzothiazole was diazotized with nitrosylsulfuric acid and coupled with the intermediate of Preparation III at a pH of 2. After a procedure similar to that of Example I, a red colorant was obtained:

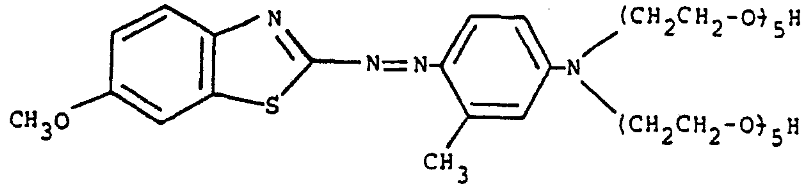

Example VI

Example of Incorporation into a Flexible Polyester Polyurethane Foam

To a mixture of a polyester polyol of hydroxyl number 46 (100 grams), water (3.6 grams), a silicone

based emulsifier (1.3 grams), stannous octoate (0.4 grams) and tertiary amine catalyst (0.3 grams) was added 0.1 gram (0.1 php) of the yellow single component liquid reactive coloring agent of Example I.

The mixture was stirred for 30 seconds to ensure a homogeneous mixture. toluene diisocyanate (45.7 grams) was added and mixing continued for 5 seconds whereupon the foam began to rise. After foam rise was completed (about 3 minutes), the foam was postcured for 8 minutes in a 120°C oven. The thus produced foam was butter yellow in color.

Example VII
Incorporation into a Polyurethane Film

A urethane prepolymer was prepared from 104 grams of a polypropylene glycol of molecular weight 2000, 22.5 grams of toluene diisocyanate, 3.2 grams of the red coloring agent of Example III. to 30 grams of the prepolymer was added 7 drops of dibutyltin dilaurate and the resulting mixture was cast at a 40 mil film on polytetrafluoroethylene. After curing at room temperature overnight, a tough, flexible, deep red film was obtained.

Example VIII
Incorporation into an Epoxy

To a mixture of 68 grams of an epoxy resin derived from bis-phenol A with weight per epoxy of about 185 to 192, 54 grams of methyltetrahydrophthalic anhydride and 0.66 grams of a tertiary amine catalyst was added 1 drop of the blue coloring agent of Example IV. After curing at 110°C, a clear blue resin was obtained.

Example IX
Example of Incorporation into a Polyester
Polyurethane Foam

A mixture of a polydiethylene adipate (equivalent weight 1066, 50 grams), N-ethylmorpholine (0.9 grams), N,N-dimethylhexadecylamine (0.05 grams), a mixture of nonionic and anionic surfactants and the colorant of Example I (0.25 grams) was blended until the components were homogeneous. To this mixture was added toluene diisocyanate (22.9 grams) and mixing was continued for 5 seconds. The mixture was poured into a container and allowed to rise forming a yellow flexible urethane foam.

Example X
Example of Incorporation into a Reaction
Injection Molding (RIM) Formulation

A mixture was prepared of an acrylonitrile and styrene modified polyol (equivalent weight 2000, 42.5 grams), a mixture of short diols (equivalent weight 48, 7.5 grams), methylene chloride (1.0 grams), dibutyltin dilaurate (1 drop) and 0.25 grams of the colorant of Example V. The mixture was blended until homogeneous. To this mixture was added a modified diphenylmethane dissocyanate (equivalent weight 147, 26.6 grams) and blending continued for 5 seconds to ensure homogeneity. After approximately 15 seconds the mixture rapidly tripled its volume and cured. The thus formed polymer was deep violet in color. Upon slicing, it was evident that the color was distributed evenly throughout the structure.

**Claims**

1. A process for removing impurities from a polyalkyleneoxy coloring agent, which comprises heating a crude reaction product containing said polyalkyleneoxy coloring agent and impurities to a temperature at which the crude reaction product separates into two liquid phases, one phase containing said coloring agent in relatively pure form and the other phase containing said impurities; and separating the phase containing said coloring agent from the phase containing said impurities characterized in that in said process a polyalkyleneoxy coloring agent is employed which has the formula:

$$R\text{-(polymeric constituent-x)}_n$$

where R is an organic dyestuff radical; the polymeric constituent is selected from polyalkylene oxides and copolymers of polyalkylene oxides in which the alkylene moiety of the polymeric constituent contains 2 or more carbon atoms and such polymeric constituent has a molecular weight of from 100 to 10,000; R is attached by means of an amino nitrogen to the polymeric constituent; n is an integer of from 1 to about 6; x is selected from —OH, $—NH_2$ and —SH.

2. The process of Claim 1 wherein said polyalkyleneoxy coloring agent is a reactive coloring agent.

3. The process of Claim 2 wherein R is selected from nitroso, nitro, azo, including monoazo, diazo and triazo, diphenylmethane, triarylmethane, zanthene, acridene, methine, thiazole, indamine, azine, oxazine, or anthraquinone dyestuff radical.

4. A proces for removing impurities from a polyalkyleneoxy coloring agent, which comprises converting a colorless intermediate compound into the corresponding polyalkyleneoxy compound; employing the resulting compound to produce compounds having chromophoric groups in the molecule in

a crude reaction mixture containing impurities; heating the crude reaction mixutre to a temperature at which the crude reaction product separates into two liquid phases, one phase containing said coloring agent in relatively pure form and the other phase containing said impurities; and separating the phase containing said reactive coloring agent from the phase containing said impurities.

5. The process of claim 4 wherein said polyalkyleneoxy coloring agent contins an azo group as the chromophoric group; said colorless intermediate compound is an aromatic amine selected from primary or secondary amines; said aromatic amine is reacted with an alkylene oxide selected from ethylene oxide; propylene oxide and mixtures of ethylene oxide and propylene oxide; and the resulting compound is coupled with a diazonium salt of an aromatic amine.

**Patentansprüche**

1. Verfahren zum Entfernen von Verunreinigungen aus einem Polyalkylenoxy-Farbstoff, welches ein Erhitzen eines diesen enthaltenden Polyalkylenoxy-Farbstoff und Verunreinigungen rohen Reaktionsproduktes auf wine Temperatur, bei welcher sich das rohe Reaktionsprodukt in zwei flüssige Phasen trennt, wovon die eine Phase den Farbstoff in verhältnis mäßig reiner Form enthält und die andere Phase die Verunreinigungen aufweist; und ein Abtrennen der den Farbstoff enthaltenden Phase von der die Verunreinigungen enthaltenden Phase umfaßt, dadurch gekennzeichnet, daß in diesem Verfahren ein Polyalkylenoxy-Farbstoff verwendet wird, der die Formel:

$$R\text{-(Polymerbestandteil-x)}_n$$

aufweist, worin R einen organischen Farbstoffrest bedeutet; der Polymerbestandteil unter Polyalkylenoxiden und Copolymeren von Polyalkylenoxiden, worin der Alkylenteil des Polymerbestandteiles zwei oder mehr Kohlenstoffatome aufweist und dieser Polymerbestandteil ein Molekulargewicht von etwa 100 bis etwa 10.000 aufweist, ausgewählt ist; R über einen Amino-Stickstoff an den Polymerbestandteil gebunden ist; n eine ganze Zahl von 1 bis etwa 6 bedeutet; und x unter —OH, —$NH_2$ und —SH ausgewählt ist.

2. Verfahren nach Anspruch 1, worin der Polyalkylenoxy-Farbstoff ein Reaktivfarbstoff ist.

3. Verfahren nach Anspruch 2, worin R unter Nitroso-, Nitro-, Azo-, einschließlich Monoazo-, Diazo- und Triazo-, Diphenylmethan-, Triarylmethan-, Xanthen-, Acridin-, Methin-, Thiazol-, Indamin-, Azin-, Oxazin- oder Anthrachinon-Farbstoffresten ausgewählt ist.

4. Verfahren zum Entfernen von Verunreinigungen aus einem Polyalkylenoxy-Farbstoff, welches Verfahren ein Überführen einer farblosen Zwischenverbindung in die entsprechende Polyalkylenoxy-Verbindung; einen Einsatz der erhaltenen Verbindung zur Ausbildung von Verbindungen mit chromophoren Gruppen im Molekül in einem Verunreinigungen enthaltenden rohen Reaktionsgemisch; ein Erhitzen des rohen Reaktionsgemisches auf eine Temperatur, bei welcher sich das rohe Reaktinsprodukt in zwei flüssige Phasen auftrennt, wovon die eine Phase de Farbstoff in verhältnismäßig reiner Form enthält und die andere Phase die Verunreinigungen aufweist; und ein Abtrennen der den Reaktivfarbstoff enthaltenden Phase von der die Verunreinigungen enthaltenden Phase umfaßt.

5. Verfahren nach Anspruch 4, worin der Polyalkylenoxy-Farbstoff eine Azogruppe als chromophore Gruppe enthält; die farblose Zwischenverbindung ein unter primären oder sekundären Aminen ausgewähltes aromatisches Amin ist; dieses aromatische Amin mit einem unter Ethylenoxid, Propylenoxid und Gemischen von Ethylenoxid mit Propylenoxid ausgewähltem Alkylenoxid umgesetzt wird; und die erhaltene Verbindung mit einem Diazoniumsalz eines aromatischen Amins gekuppelt wird.

**Revendications**

1. Un procédé pour éliminer les impuretés d'un agent colorant polyalkylèneoxy, qui consiste à chauffer un produit de réaction brut contenant ledit agent colorant polyalkylèneoxy et des impuretés à une température à laquelle le produit de réaction brut se sépare en deux phases liquides, une phase contenant ledit agent colorant sous forme relativement pure et l'autre phase contenant lesdites impuretés; et à séparer la phase contenant ledit gant colorant de la phase contenant lesdites impuretés, caractérisé en ce que, dans ledit procédé, on utilise un agent colorant polyalkylèneoxy qui répond à la formule:

$$R\text{-(constituant polymère-x)}_n$$

dans laquelle R est un radical de colorant organique; la constituant polymère est choisi parmi les oxydes de polyalkylènes et les copolymères d'oxydes de polyalkylènes dans lesquels le reste d'alkylène du constituant polymère contient 2 atomes de carbone ou plus et ce constituant polymère a un poids molécluaire d'environ 100 à environ 10 000; R est fixé par un atome d'azote de groupe amino au consistuant polymère; n est en entier de 1 à environ 6; et x est choisi parmi —OH, —$NH_2$ et —SH.

2. Le procédé selon la revendication 1 dans lequel ledit agent colorant polyalkylèneoxy est un agent colorant réactif.

3. Le procédé selon la revendication 2 dans lequel R est choisi parmi les radicaux nitroso, nitro, les

radicaux de colorants azoïques, comprenant les colorants monoazoïques, bisazoïques et trisazoïques, les radicaux de colorants de diphénylméthane, de triarylméthane, de xanthène, d'acridine, de colorants méthiniques, de colorants de thiazole, d'indamine, d'azine, d'oxazine ou d'anthraquinone.

4. Un procédé pour éliminer les impuretés d'un agent colorant polyalkylèneoxy, qui consiste à transformer un intermédiaire incolore en le composé polyaldkylèneoxy correspondant; à utiliser le composé résultant pour produire des composés ayant des groupes chromophores dans leur molécule dans un mélange de réaction brut contenant des impuretés; à chauffer le mélange de réaction brut à une température à laquelle le produit de réaction brut se sépare en deux phases liquides, un phase contenant ledit agent colorant sous forme relativement pure et l'autre phase contenant lesdites impuretés; et à séparer la phase contenant ledit agent colorant réactif de la phase contenant lesdites impuretés.

5. Le procédé selon la revendication 4, dans lequel ledit agent colorant polyalkylèneoxy contient un groupe azoïque comme groupe chromophore; ledit intermédiaire incolore est une amine aromatique choisie parmi les amines primaires et secondaires; ladite amine aromatique est mise à réagir avec un oxyde d'alkylène choisi parmi l'oxyde d'éthylène, l'oxyde de propylène et les mélanges d'oxydes d'éthylène et d'oxyde de propylène; et le composé résultant est copulé avec un sel de diazonium d'une amine aromatique.